# EUROPÄISCHE PATENTSCHRIFT

(11) **EP 0 218 071 B1**
(45) Veröffentlichungstag und Bekanntmachung des Hinweises auf die Patenterteilung: **17.02.1993**
(21) Anmeldenummer: 86111745.5
(22) Anmeldetag: 25.08.1986
(51) Int. Cl.: G06F 7/50

(54) **Addierzelle für Carry-Ripple-Addierer in CMOS-Technik**
Adder cell for a carry ripple adder of the CMOS technique
Cellule d'addition pour un additionneur à propagation de retenue en technique CMOS

(30) Priorität: 30.09.1985 DE 3534892
(43) Veröffentlichungstag der Anmeldung: 15.04.1987
(73) Patentinhaber: SIEMENS AKTIENGESELLSCHAFT, 80333 München (DE)
(72) Erfinder: Knauer, Karl, Dr., D-8018 Grafing (DE)

(56) Entgegenhaltungen:
- EP-A- 0 098 692
- EP-A- 0 155 019
- US-A- 4 417 314
- SIEMENS FORSCH.- u. ENTWICKL.-BER., Band 5, Nr. 6, (1976-12), Seiten 324-326; Springer Verlag, Berlin, DE; D. EICHRODT: "Rewarding application of transmission gates in MOS-LSI circuits"

## Beschreibung

Die vorliegende Erfindung betrifft eine Schaltungsanordnung zum Aufbau eines Carry-Ripple-Addierers mit einem NAND-Gatter und einem NOR-Gatter, deren Eingänge die zu addierenden Größen sind.

Bei einer großen Anzahl von digitalen Logikschaltungen, beispielsweise digitalen Filtern, Signalprozessoren und Mikroprozessoren werden Addierer benötigt. Das einfachste Prinzip für einen solchen Addierer ist das "Ripple-Carry"-Verfahren, bei dem ein entstehender Übertrag (Carry) seriell von einer Addiererzelle für das jeweils niederwertige Bit zu einer Addiererzelle für das jeweils höherwertige Bit übertragen wird. Die Durchlaufzeit des Übertragssignals bestimmt dabei im wesentlichen die Additionszeit. Auch aufwendigere Addiererprinzipien, wie z. B. das bekannte "Carry-Look-Ahead"-Verfahren, bauen auf Elementen des "Ripple-Carry"- Verfahrens auf.

Addiererzellen der eingangs genannten Art sind beispielsweise aus H. Weiß, K. Horninger: "Integrierte MOS-Schaltungen", Springer-Verlag Berlin-Heidelberg-New York (1982), Seiten 188 bis 194 bekannt. Den bekannten Addiererzellen haftet der Nachteil an, daß in dem Übertragspfad, der zeitkritsch für die gesamte Rechenzeit eines mit derartigen Addiererzellen aufgebauten Rechenwerks ist, entweder eine verhältnismäßig große Anzahl von Gattern eingefügt ist und oder daß die in den Übertragspfad eingefügten Gatter Bestandteile von Kombinationsgattern sind. Im ersteren Fall wirkt sich die Anzahl von in Reihe geschalteten Gattern ungünstig auf die Durchlaufzeit von Übertragssignalen aus. Im zweiten Fall wirkt sich unter Umständen zusätzlich die Tatsache ungünstig aus, daß die Aufladung der Kapazität des Übertragsausgangs aufgrund der relativen Hochohmigkeit der als Bestandteile von Kombinationsgattern ausgebildeten Gatter nicht mit der erforderlichen Flankensteilheit erfolgt.

In der europäischen Veröffentlichung EP-A-155019, ist eine Addierzelle beschrieben, die ein NAND und ein NOR Gatter aufweist, deren Ausgänge Transfertransistoren steuern, um die Summe und den Ausgangsübertrag zu erzeugen. Jedoch benötigt auch diese Schaltung das invertierte Eingangsübertragssignal und dadurch auch zusätzliche Gatter um das Eingangsübertragungssignal zu invertieren und um das Ausgangsübertragssignal zu erzeugen.

Der vorliegenden Erfindung liegt die Aufgabe zugrunde, eine Addiererzelle der eingangs genannten Art zu schaffen, bei der die Nachteile bekannter Addiererzellen bezüglich des Übertragspfades wirksam vermieden werden und bei der außerdem der Transistoraufwand für die Gatteranordnung wesentlich reduziert ist, so daß sich insgesamt eine Flächenersparnis ergibt.

Die der vorliegenden Erfindung zugrundeliegende Aufgabe wird bei einer Addiererzelle der eingangs genannten Art gemäß den Merkmalen des Patentanspruchs 1 oder den Merkmalen des Patentanspruchs 2 gelöst.

Im folgenden wird die Erfindung anhand zweier Ausführungsbeispiele für die vorliegende Erfindung betreffender Figuren im einzelnen erläutert.
- Fig. 1: zeigt ein Prinzipschaltbild für ein erstes Ausführungsbeispiel für die vorliegende Erfindung.
- Fig. 2: zeigt ein Prinzipschaltbild für ein zweites Ausführungsbeispiel für die vorliegende Erfindung.

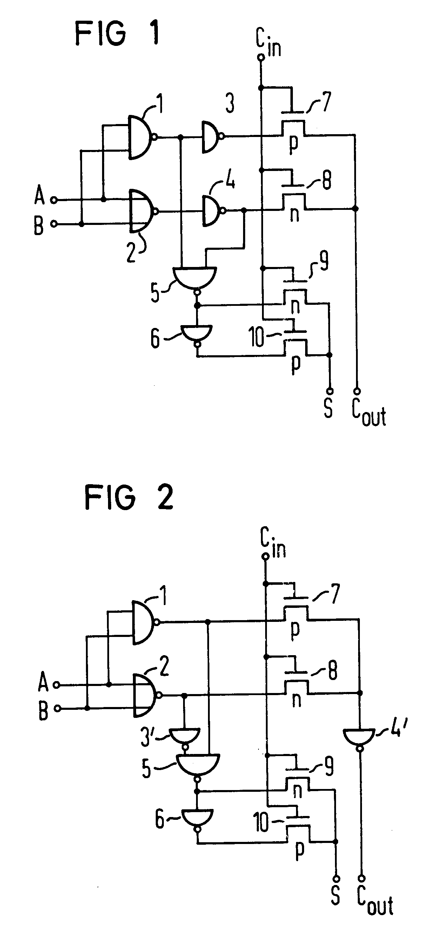

Wie Fig. 1 zeigt, weist die Addiererzelle gemäß einem ersten Ausführungsbeispiel für die vorliegende Erfindung eine Gatteranordnung für zwei Variable, zur Bewertung eines Übertragseingangssignals zur Summenbildung und zur Übertragsbildung auf, wobei jeweils eine Eingangsklemme für eine der zwei Variablen und ein Übertragseingangssignal sowie jeweils eine Ausgangsklemme für ein Summensignal und ein Übertragsausgangssignal vorgesehen ist. Die Gatteranordnung ist derart gebildet, daß das Aufladen der Kapazität des Übertragsausgangs über eine Reihenschaltung von zwei Transistorgattern 3, 7 bzw. 4, 8 von einer Versorgungsspannungsquelle aus erfolgt, wobei diese Transistorgatter 3, 7 bzw. 4, 8 nicht in einem Kombinationsgatter enthalten sind, so daß das eine der Transistorgatter 3 bzw. 4 nämlich ein treibender Inverter, das nicht in den zeitkritischen Übertragspfad eingefügt ist, ohne Einschränkung durch die Layout-Geometrie wesentlich größer und damit niederohmiger als das nachfolgende andere Transistorgatter 7 bzw. 8, nämlich ein folgendes Transfergatter, auslegbar ist. In der gezeigten Schaltungsanordnung sind die beiden Eingangsklemmen für die Variablen A, B jeweils mit einem ersten Eingang bzw. einem zweiten Eingang eines NAND-Gatters 1 und eines NOR-Gatters 2 verbunden. Der Ausgang des NAND-Gatters 1 ist mit dem Eingang des einen als Inverter wirkenden Transistorgatters 3 und einem ersten Eingang eines weiteren NAND-Gatters 5 verbunden. Der Ausgang des NOR-Gatters 2 ist mit dem Eingang des anderen als Inverter wirkenden Transistorgatters 4 verbunden. Der Ausgang des einen Transistorgatters 3 ist mit der Source-Elektrode des einen als Transfergatter wirkenden, als p-Kanal-FET ausgeführten Transistorgatters 7 verbunden. Der Ausgang des anderen als Inverter wirkenden Transistorgatters 4 ist mit der Source-Elektrode des anderen als Transfergatter wirkenden, als n-Kanal-FET ausgeführten Transistorgatters 8 und mit einem zweiten Eingang des weiteren NAND-Gatters 5 verbunden. Die Drain-Elektroden der beiden als Transfergatter wirkenden Transistorgatter 7, 8 sind jeweils mit der Ausgangsklemme für das Übertragsausgangssignal Cₒᵤₜ verbunden. Der Ausgang des weiteren NAND-Gatters 5 ist mit der Source-Elektrode eines weiteren als Transfergatter wirkenden, als n-Kanal-FET ausgeführten Transistorgatters 9 und dem Eingang eines weiteren, als Inverter wirkenden Transistorgatters 6 verbunden. Der Ausgang dieses weiteren als Inverter wirkenden Transistorgatters 6 ist mit der Source-Elektrode eines weiteren als Transfergatter wirkenden, als p-Kanal-FET ausgeführten Transistorgatters 10 verbunden. Die Drain-Elektroden der beiden als Transfergatter wirkenden Transistorgatter 9, 10 sind jeweils mit der Ausgangsklemme für das Summensignal S verbunden. Schließlich sind die Gate-Elektroden aller als Transfergatter wirkenden Transistorgatter 7, 8, 9, 10 mit der Eingangsklemme für das Übertragseingangssignal Cᵢₙ verbunden.

Diese Schaltungsanordnung benötigt 22 Transistoren, was gegenüber bekannten Schaltungen für Addiererzellen eine wesentliche Einsparung (z. B. gegenüber 28 Transistoren) bedeutet. Das Aufladen der Kapazität des Carry- oder Übertragsausgangs erfolgt - wie bei bekannten Prinzipien - über eine Serienschaltung von 2 Transistorgattern von der Versorgungsspannungsquelle her. Da diese Gatter aber nicht wie bei den bekannten Prinzipien in einem Kombinationsgatter enthalten sind, kann der treibende Inverter, der nicht in dem zeitkritischen Übertragspfad angeordnet ist, wesentlich niederohmiger als das nachfolgende Transfergatter ausgelegt werden, und zwar ohne Schwierigkeiten bei der Layout-Geometrie zu erhalten. Als Lastkapazität müssen im wesentlichen vier Transistor-Gates umgeladen werden, was einer bekannten Addiererzelle mit 28 Transistoren entspricht.

Dieses beschriebene Ausführungsbeispiel ist insbesondere für Addierer mit nur wenigen ( z. B. zwei) Addiererzellen geeignet, da sich die Einsatzspannungen der Transistoren in dem Übertragspfad addieren, was bei einer größeren Anzahl von Addiererzellen zu einer Signalverfälschung führen könnte.

Fig. 2 zeigt, wie bereits erläutert, das Prinzipschaltbild eines zweiten Ausführungsbeispiels für die vorliegende Erfindung, welches Ausführungsbeispiel die zuvor erwähnte Beschränkung des zuerst beschriebenen Ausführungsbeispiels nicht aufweist. In diesem in Fig. 2 beschriebenen Ausführungsbeispiel fällt der durch die Einsatzspannungen der Transistoren bedingte Spannungsabfall dadurch fort, daß in den Übertragspfad ein Inverter eingefügt ist, der wiederum nicht Bestandteil eines Kombinationsgatters ist und dementsprechend aus den zuerst genannten Gründen frei von Schwierigkeiten bezüglich der Layout-Geometrie niederohmiger als die übrigen Transistorgatter der Schaltungsanordnung ausgelegt werden kann. Dadurch ergibt sich eine rasche Aufladung der Kapazität des Übertragsausgangs bis zu den maximalen Spannungspegeln. Die gemäß dem zweiten Ausführungsbeispiel ausgebildete Addiererzelle weist eine Gatteranordnung auf, durch die das Aufladen der Kapazität des Übertragsausgangs nur über ein einziges Transistorgatter 4' von einer Versorgungsspannungsquelle aus erfolgt. Die beiden Eingangsklemmen für die zwei Variablen A, B sind jeweils mit einem ersten Eingang bzw. einem zweiten Eingang eines NAND-Gatters 1 und eines NOR-Gatters 2 verbunden. Der Ausgang des NAND-Gatters 1 ist mit der Source-Elektrode eines ersten als Transfergatter wirkenden, als p-Kanal-FET ausgeführten Transistorgatters 7 und einem ersten Eingang eines weiteren NAND-Gatters 5 verbunden. Der Ausgang des NOR-Gatters 2 ist mit der Source-Elektrode eines zweiten als Transfergatter wirkenden, als n-Kanal-FET ausgeführten Transistorgatters 8 und dem Eingang eines als Inverter wirkenden weiteren Transistorgatter 3' verbunden. Der Ausgang des als Inverter wirkenden Transistorgatters 3' ist mit einem zweiten Eingang des weiteren NAND-Gatters 5 verbunden. Der Ausgang dieses weiteren NAND-Gatters 5 ist mit der Source-Elektrode eines dritten als Transfergatter wirkenden, als n-Kanal-FET ausgeführten Transistorgatters 9 und dem Eingang eines weiteren als Inverter wirkenden Transistorgatters 6 verbunden. Der Ausgang dieses weiteren als Inverter wirkenden Transistorgatters 6 ist mit der Source-Elektrode eines vierten als Transfergatter wirkenden, als p-Kanal-FET ausgeführten Transistorgatters 10 verbunden. Die Drain-Elektroden des ersten Transistorgatters 7 und des zweiten Transistorgatters 8 sind gemeinsam mit dem Eingang des als treibender Inverter wirkenden Transistorgatters 4' verbunden. Der Ausgang dieses als treibender Inverter wirkenden Transistorgatters 4' ist mit der Ausgangsklemme für das Übertragsausgangssignal Cₒᵤₜ verbunden. Die Drain-Elektroden des dritten und des vierten Transistorgatters 9, 10 sind mit der Ausgangsklemme für das Summensignal S verbunden. Schließlich sind die Gate-Elektroden aller als Transfergatter wirkenden Transistorgatter 7, 8 , 9, 10 gemeinsam mit der Eingangsklemme für das Übertragseingangssignal Cᵢₙ verbunden.

Auch dieses zweite Ausführungsbeispiel benötigt nur 22 Transistoren gegenüber z. B. 28 Transistoren nach dem Stand der Technik. Daraus ergibt sich ebenfalls eine gegenüber dem Stand der Technik erzielbare Flächenersparnis.

### Bezugszeichenliste

- A, B: Variable
- Cᵢₙ: Übertragseingangssignal
- Cₒᵤₜ: Übertragsausgangssignal
- S: Summensignal
- 1: NAND-Gatter
- 2: NOR-Gatter
- 3: Transistorgatter, Inverter
- 3': Transistorgatter, Inverter
- 4: Transistorgatter, Inverter
- 4': Transistorgatter, Inverter
- 5: NAND-Gatter
- 6: Transistorgatter, Inverter
- 7: Transistorgatter
- 8: Transistorgatter
- 9: Transistorgatter, Transfergatter
- 10: Transistorgatter, Transfergatter

## Patentansprüche

1. Schaltungsanordnung zum Aufbau eines Carry-Ripple-Addierers mit
a) einem NAND-Gatter 1 und einem NOR-Gatter 2, deren Eingänge die zu addierenden Größen sind,
**gekennzeichnet** durch die folgenden Merkmale:
b) die Ausgangssignale dieser beiden Gatter 1 bzw. 2 werden mit Hilfe zweier Inverter 3 bzw. 4 invertiert;
c) das Ausgangssignal des NAND-Gatters 1 wird mit Hilfe eines zweiten NAND-Gatters 5 mit dem Ausgangssignal des Inverters 4 verknüpft und mittels eines dritten Inverters 6 invertiert;
d) mit Hilfe von zwei Transfertransistoren vom n-Kanal bzw. p-Kanal Typ, deren Gate-Elektroden nur von dem Eingangsübertragssignal Cᵢₙ angesteuert werden, wird ausgewählt, ob
- das Ausgangsübertragssignal Cₒᵤₜ durch das Ausgangssignal des Inverters 3 oder des Inverters 4 gegeben ist, und ob
- das Summensignal (S) durch das Ausgangssignal des NAND-Gatters 5 oder des Inverters 6 gegeben ist;
e) die Transistorgatter 3, 4, 7 und 8 sind nicht in einem Kombinationsgatter enthalten.

2. Schaltungsanordnung zum Aufbau eines Carry-Ripple-Addierers, mit
a) einem NAND-Gatter 1 und einem NOR-Gatter 2, deren Eingänge die zu addierenden Größen sind,
**gekennzeichnet** durch die folgenden Merkmale:
b) das Ausgangssignal des NOR-Gatters 2 wird mit Hilfe eines Inverters 3' invertiert und das invertierte Signal wird mit Hilfe eines NAND-Gatters 5 mit dem Ausgangssignal des NAND-Gatters 1 verknüpft und anschließend mit Hilfe eines Inverters 6 invertiert;
c) den Ausgängen der Gatter 1 bzw. 2 sind ein Transfertransistor vom p-Kanal bzw. vom n-Kanal Typ nachgeschaltet, deren Gate-Elektroden nur von dem Eingangsübertragsignal Cᵢₙ angesteuert werden, und deren Ausgänge einem Inventer 4' zugeführt werden, welcher das Ausgangsübertragssignal Cₒᵤₜ erzeugt;
d) mit Hilfe zweier weiterer Transfertransistoren 9 bzw. 10 vom n-Kanal bzw. p-Kanal Typ, deren Gate-Elektroden nur vom Eingangsübertragssignal Cᵢₙ angesteuert werden, wird ausgewählt, ob das Summensignal (S) durch das Ausgangssignal des NAND-Gatters 5 oder des Inverters 6 gegeben ist;
e) die Transistorgatter 4', 7 und 8 sind nicht in einem Kombinationsgatter enthalten.

## Claims

1. Circuit arrangement for constructing a carry ripple adder having
a) a NAND gate 1 and a NOR gate 2, whose inputs are the variables to be added, characterised by the following features:
b) the output signals of the two gates 1 and 2 are inverted with the aid of two inverters 3 and 4 respectively;
c) the output signal of the NAND gate 1 is connected with the aid of a second NAND gate 5 to the output signal of the inverter 4 and is inverted by means of a third inverter 6;
d) with the aid of 2 transfer transistors of n-channel or p-channel type, whose gate electrodes are driven only by the input carry signal Cᵢₙ, it is selected whether
- the output carry signal Cₒᵤₜ is given by the output signal of inverter 3 or of inverter 4, and whether
- the sum signal (S) is given by the output signal of the NAND gate 5 or of the inverter 6;
e) the transistor gates 3, 4, 7 and 8 are not contained in a combination gate.

2. The circuit arrangement for constructing a carry ripple adder having
a) a NAND gate 1 and a NOR gate 2 whose inputs are the variables to be added, characterised by the following features:
b) the output signal of the NOR gate 2 is inverted with the aid of a inverter 3' and the inverted signal is connected with the aid of a NAND gate 5 to the output signal of the NAND gate 1 and subsequently inverted with the aid of an inverter 6;
c) connected downstream of the outputs of the gate 1 and 2 is a transfer transistor of p-channel and of n-channel type respectively whose gate electrodes are driven only by the input carry signals Cᵢₙ and whose outputs are fed to an inverter 4' which generates the output carry signal Cₒᵤₜ;
d) with the aid of two further transfer transistors 9 and 10 of n-channel and p-channel type respectively whose gate electrodes are driven only by the input carry signal Cᵢₙ it is selected whether the sum signal (S) is given by the output signal of the NAND gate 5 or of the inverter 6;
and
e) the transistor gates 4', 7 and 8 are not contained in a combination gate.

## Revendications

1. Montage pour la réalisation d'un additionneur Carry-Ripple, comportant
a) une porte NON-ET 1 et une porte NON-OU 2, dont les signaux d'entrée sont les grandeurs à additionner,
caractérisé par les particularités suivantes :
b) les signaux de sortie de ces deux portes 1 et 2 sont inversés à l'aide d'au moins deux inverseurs 3 et 4;
c) le signal de sortie de la porte NON-ET 1 est combiné, au moyen d'une seconde porte NON-ET 5, au signal de sortie de l'inverseur 4 et est inversé à l'aide d'un troisième inverseur 6;
d) à l'aide de deux transistors de transfert du type à canal n et du type à canal p, dont les électrodes de grille sont commandées uniquement par le signal de report d'entrée Cᵢₙ, on détermine si
- le signal de report de sortie Cₒᵤₜ est formé par le signal de sortie de l'inverseur 3 ou de l'inverseur 4, et si
- le signal somme (S) est formé par le signal de sortie du signal NON-ET 5 ou de l'inverseur 6;
e) les portes à transistors 3, 4, 7 et 8 ne sont pas contenues dans une porte combinée.

2. Montage pour réaliser un additionneur Carry-Ripple, comportant
a) une porte NON-ET 1 et une porte NON-OU 2, dont les signaux d'entrée sort les grandeurs à additionner,
caractérisé par les particularités suivantes :
b) le signal de sortie de la porte NON-OU 2 est inversé au moyen de l'inverseur 3' et le signal inversé est combiné, au moyen d'une porte NON-ET 5, avec le signal de sortie de la porte NON-ET 1 et est ensuite inversé par un inverseur 6;
c) en aval des sorties des portes 1 et 2, sont branchés respectivement un transistor de transfert du type à canal p et un transistor de transfert du type à canal n, dont les électrodes de grille sont commandées uniquement par le signal de report d'entrée Cᵢₙ et dont les sorties sont raccordées à un inverseur 4', qui produit le signal de report de sortie Cₒᵤₜ;
d) à l'aide de deux autres transistors de transfert 9 et 10 dont l'un est du type à canal n et dont l'autre est du type à canal p dont les électrodes de grille sont commandées uniquement par le signal de report d'entrée Cᵢₙ, on détermine si le signal somme (S) est formé par le signal de sortie de la porte NON-ET 5 ou par le signal de sortie de l'inverseur 6;
e) les portes à transistors 4', 7 et 8 ne sont pas contenues dans une porte combinée.
